# EUROPÄISCHE PATENTSCHRIFT

(11) **EP 1 253 732 B1**
(45) Veröffentlichungstag und Bekanntmachung des Hinweises auf die Patenterteilung: **19.04.2006**
(21) Anmeldenummer: 02360072.9
(22) Anmeldetag: 26.02.2002
(51) Int. Cl.: H04B 10/18, G02B 6/34

(54) **Schnell adaptierender PMD-Kompensator**
Fast adaptive PMD-kompensator
Compensateur de PMD adaptatif rapide

(30) Priorität: 28.04.2001 DE 10121025
(43) Veröffentlichungstag der Anmeldung: 30.10.2002
(73) Patentinhaber: ALCATEL, 75008 Paris (FR)
(72) Erfinder: Bülow, Henning, 70806 Kornwestheim (DE)
(74) Vertreter: Rausch, Gabriele

(56) Entgegenhaltungen:
- EP-A- 0 909 045
- T. OZEKI ET AL: "Adaptive equalization of polarization-mode dispersion" OFC'93 TECHN. DIGEST, 21. Februar 1993 (1993-02-21), Seiten 143-144, XP009045347 SAN JOSE, CALIFORNIA
- L. MÖLLER: "Broadband PMD compensation in WDM systems" ECOC 2000, 3. September 2000 (2000-09-03), Seiten 159-160, XP001205917 BERLIN, GERMANY

## Beschreibung

Die Erfindung betrifft ein Verfahren und eine Vorrichtung zum Einstellen der Polarisation eines eingehenden optischen Signals mit aufmodulierten Daten auf einen definierten Polarisationszustand, mit einem Polarisationsteiler, der das eingehende optische Signal derart bearbeitet, dass an seinem Ausgang zwei optische Signale mit orthogonalen Polarisationszuständen vorliegen, mit einem nachgeschalteten ersten Phasensteller auf dem Signalpfad mindestens eines der beiden Ausgangssignale aus dem Polarisationsteiler, mit einem ersten optischen Koppler, der das Licht der beiden Ausgangssignale jeweils etwa zu gleichen Teilen auf zwei Ausgänge verteilt, mit einem zweiten Phasensteller auf dem Signalpfad mindestens eines der beiden Ausgangssignale aus dem ersten optischen Koppler, sowie mit einem nachgeschalteten zweiten optischen Koppler, wobei dem ersten und zweiten Phasensteller in einer Rückkopplungsschleife jeweils ein Stellsignal zugeführt wird, das aus einem dem bearbeiteten optischen Signal entnommenen Gütesignal gewonnen wird.

Ein derartiges Verfahren ist beispielsweise bekannt aus den Konferenzbeiträgen von T. Ozeki und T. Kudo, "Adaptive equalization of polarization-mode dispersion", Techn. Dig. OFC'93, W19, 1993, pp. 143-144 oder von L. Möller, "Broadband PMD Compensation in WDM Systems", proc. ECOC 2000, Sep 3-7, München, Germany, 2000, P 1.15.

Zur Übertragung von Signalen insbesondere Datensignalen werden heute vielfach elektromagnetische Wellen im Frequenzbereich des sichtbaren Lichts verwendet. Dabei wird, wie aus der Hochfrequenztechnik im Radiowellenbereich an sich bekannt, einem Trägersignal ein Datensignal aufmoduliert. Auf der optischen Übertragungsstrecke, die in der Regel Spiegel, optische Fasern und andere dispersive Elemente umfasst, treten Verzerrungen des gesendeten optischen Signals auf, die zu einer Verfälschung oder Störung der übertragenen Daten führen können. Solche Verzerrungen rühren beispielsweise von einer chromatischen Dispersion oder auch von einer Polarisationsmodendispersion (=PMD) her.

Beispielsweise in Systemen mit 40G Kanalratenübertragung über mehrere hundert Kilometer Verbindungslängen sind bei Betreibern von optischen Kommunikationsnetzwerken schon heute schon sehr viele optische Fasern mit einer derart hohen PMD eingesetzt, dass eine Dispersionskompensation mit den eingangs beschriebenen Merkmalen unumgänglich ist. Diese wird in der Regel durch einen empfängerseitig im Übertragungsnetz installierten Dispersionskompensator realisiert.

So ist beispielsweise in dem eingangs zitierten Artikel von L. Möller ein PMD-Kompensator beschrieben, der empfangsseitig Verzerrungen aufgrund von PMD-Effekten zumindest teilweise kompensieren kann.

Mit diesen bekannten Kompensatoren lassen sich hierdurch bislang nur Effekte erster und bestenfalls niederer Ordnungen verarbeiten.

Einfache Anordnungen, wie sie z.B. in F.Heismann et al., "Automatic compensation of first-order polarization mode dispersion in a 10 Gb/s transmission system", proc. ECOC'98, WdC11, 1998 und in F.Roy et al., "A simple dynamic polarization mode dispersion compensator", Techn. Dig. OFC/lOOC'99, 1999,TuS4 beschrieben werden, kompensieren lediglich die PMD erster Ordnung. Damit lässt sich eine Faser-PMD von maximal etwa 35% der Bitdauer kompensieren. Dieser Wert (35ps für 10Gb/s) wird insbesondere bei 40Gb/s-Systemen zu klein sein, da er eine PMD von lediglich 8.8ps bedeutet.

Wird dieser PMD-Grenzwert überschritten, so treten auch Verzerrungen sogenannter höherer Ordnung auf. Erste Entzerreranordnungen für auch höhere PMD-Ordnungen sind z.B. in dem oben zitierten Artikel von L. Möller beschrieben. Zum einen ist ersichtlich, dass mit zunehmenden Ordnungen der Aufwand für die Signalprozessierung stark zunimmt und zum anderen ist eine hinreichend schnelle Adaption einer derartigen Anordnung mit vielen freien Parametem nicht sichergestellt.

Auch bei nicht PMD-verzerrten optischen Signalen, die also nur mit einem definierten Polarisationszustand eingehen, können die oben definierten Verfahren und zugehörigen Vorrichtungen als Schaltungen zum Einstellen der Polarisation eingesetzt werden. Nachteilig bei den oben beschriebenen bekannten Lösungen aus dem Stand der Technik ist dabei, dass jeweils nur ein einziges Gütesignal zum Optimieren mehrerer Stellgrößen verwendet wird. Zum Einstellen der Polarisation wird dabei jeweils ein Wobbelverfahren mit einer Maximumsuche eingesetzt, das einerseits umständlich und andererseits ungenau wirkt, da ein optisches Maximum in der Regel nur schwer exakt lokalisierbar ist. Außerdem sind die bekannten Verfahren sehr zeitaufwendig und bedürfen andererseits auf der apparativen Seite einer aufwendigen Logikschaltung zum Steuern bzw. zum Regeln.

Aufgabe der vorliegenden Erfindung ist es demgegenüber, ein Verfahren und eine Vorrichtung der eingangs beschriebenen Art mit möglichst einfachen Mitteln dahingehend weiterzubilden, dass für jede Stellgröße nur ein einziges zugehöriges Gütesignal eingesetzt wird, dass anstelle einer Maximum-Suche die Optimierung durch eine Suche nach einem Minimumsignal bzw. einem Nullabgleich erfolgen kann, dass die verwendeten Gütesignale bipolar sind und damit eine Information über die Signalrichtung in sich tragen, dass das entsprechende Einstellverfahren schneller und einfacher ohne kompliziertes Wobbeln ("dithern") der Stellgrößen erfolgen kann und dass eine möglichst unaufwendig zu realisierende Kontrolllogik für die Rückkopplung eingesetzt werden kann.

Erfindungsgemäß wird diese Aufgabe auf ebenso überraschend einfache wie wirkungsvolle Art und Weise dadurch gelöst, dass ein Differenzelement vorgesehen ist, welchem die beiden parallelen optischen Signale von einem Punkt ihrer Signalpfade nach dem ersten optischen Koppler zugeführt werden, wobei im Differenzelement aus der Differenz der beiden zugeführten Signale ein bipolares Gütesignal gewonnen wird, und dass dem Differenzelement ein Steuerelement nachgeschaltet ist, welches ein Stellsignal an einen der Phasensteller erzeugt, das den Phasensteller derart einstellt, dass der Betrag des Gütesignals minimiert, insbesondere auf Null geregelt wird.

Durch die simultane und bipolare Adaption aller Stellgrößen des optischen Prozessorteils der erfindungsgemäßen Vorrichtung kann einerseits um Größenordnungen schneller (in 10 µs statt in 10 ms) auf eine sich ändernde PMD-Verzerrung reagiert werden. Mit der Erfindung wird außerdem auch die Einstellung von Entzerrern von PMD höherer Ordnungen (höhere Stellgrößenzahl) ermöglicht, wenn Vielfach-Rückkopplungen eingesetzt werden. Der technische Aufbau der erfindungsgemäßen Vorrichtung ist sehr kompakt und kann integriert-optisch ausgeführt werden, so dass er für DWDM-Systeme geeignet ist, welche für jede Wellenlänge einen eigenen PMD-Kompensator benötigen.

Besonders bevorzugt ist eine Ausführungsform der erfindungsgemäßen Vorrichtung, bei der das Steuerelement als Integrator ausgeführt ist, der das zugeführte Gütesignal zeitlich aufintegriert und als Stellsignal an den Phasensteller weiterleitet. Damit lässt sich die erfindungsgemäße Vorrichtung technisch besonders einfach und kompakt ausführen.

Die Vorteile der vorliegenden Erfindung lassen sich bei einer Ausführungsform auch für eine Vorrichtung mit einem weiteren Phasensteller ausnutzen, wenn ein zweites Differenzelement mit nachgeschaltetem zweitem Steuerelement vorgesehen ist, das Stellsignale für den zweiten Phasensteller liefert.

Besonders kompakt ist eine Weiterbildung dieser Ausführungsform, bei der die dem ersten und dem zweiten Differenzelement zugeführten Signale an denselben Punkten der Signalpfade der parallelen optischen Signale zwischen dem ersten und dem zweiten optischen Koppler bzw. zwischen dem zweiten Phasensteller und dem zweiten optischen Koppler abgegriffen werden.

Eine alternative Weiterbildung sieht vor, dass der Signalabgriff für die beiden Eingangssignale in das erste Differenzelement von einem Punkt auf dem Signalpfad beiden parallelen optischen Signale nach dem ersten optischen Koppler und vor dem zweiten Phasensteller bzw. einem Punkt zwischen dem ersten und dem zweiten optischen Koppler und der Signalabgriff für die beiden Eingangssignale in das zweite Differenzelement von einem Punkt nach dem zweiten Phasensteller und vor dem zweiten optischen Koppler bzw. einem Punkt zwischen dem ersten und dem zweiten optischen Koppler erfolgt, dass ein dritter optischer Koppler den beiden Signaleingängen in das zweite Differenzelement vorgeschaltet ist, und dass auf einem Signalpfad vor den beiden Signaleingängen in den dritten optischen Koppler ein Phasenglied zur festen Phasenverschiebung der Signalphase, vorzugsweise um π/2 vorgesehen ist. Damit lässt sich eine besonders zielgenaue Regelung der beiden unterschiedlichen Phasensteller erreichen.

Ganz besonders bevorzugt ist eine Ausführungsform der erfindungsgemäßen Vorrichtung, bei der auf einem Ausgangssignalpfad nach dem zweiten optischen Koppler ein Laufzeit-Verzögerungselement vorgesehen ist, dem ein Polarisations-Kombinierer oder ein polarisationserhaltendes Koppelglied nachgeschaltet ist. Auf diese Weise kann mit der erfindungsgemäßen Vorrichtung das eingehende optische Signal PMD-entzerrt werden, was die weiter oben diskutierten Vorteile mit sich bringt. In diesem Bereich dürfte auch eine der wichtigsten Einsatzmöglichkeiten der Erfindung liegen.

Um die erfindungsgemäße Anordnung auch bei sehr starken PMD-Verzerrungen einsetzen zu können, zeichnet sich eine besonders bevorzugte Ausführungsform der erfindungsgemäßen Vorrichtung dadurch aus, dass mindestens ein Korrelator vorgesehen ist, der das Gütesignal aus einem der Differenzelemente mit dem Eingangssignal der Vorrichtung und/oder mit einem daraus abgeleiteten Taktsignal korreliert.

Alternativ kann in einer einfacher zu realisierenden Ausführungsform mindestens ein Korrelator vorgesehen sein, der die Eingangssignale zu einem der Differenzelemente mit dem Eingangssignal der Vorrichtung und/oder mit einem daraus abgeleiteten Taktsignal korreliert.

In beiden Ausführungsformen ist es günstig, wenn mindestens ein Korrelator Wandelglieder zur optisch-elektrischen Wandlung ihrer Eingangssignale aufweist, und dass dieser Korrelator im übrigen als elektrische Baugruppe realisiert ist. In der Regel wird man bestrebt sein, möglichst wenige rein optische Bauelemente und dafür erheblich mehr preisgünstige und kompakte elektrische Baugruppen in der Vorrichtung zu implementieren.

Besonders bevorzugt ist auch eine Ausführungsform der erfindungsgemäßen Vorrichtung, bei der mehrere Kaskaden mit weiteren Phasenstellern und weiteren optischen Kopplern vorgesehen sind. Dadurch wird ein kontinuierlicher Betrieb der Anordnung ohne die Notwendigkeit zum Rücksetzen der einzelnen Phasensteller ermöglicht.

Vorteilhaft ist auch eine Ausführungsform, bei der mindestens ein Differenzelement Wandelglieder zur optisch-elektrischen Wandlung seiner Eingangssignale aufweist, und bei der dieses Differenzelement im übrigen als elektrische Baugruppe realisiert ist. Auch hier können wieder Einsparungen bezüglich Kosten und Größe der Vorrichtung durch Ersetzen von optischen Bauteilen durch entsprechende elektrische erreicht werden.

Noch größere Einsparungen lassen sich bei einer vorteilhaften Weiterbildung dieser Ausführungsform dadurch erzielen, dass das Differenzelement Wandelglieder zur Analog/Digital-Wandlung seiner optisch-elektrisch gewandelten Eingangssignale aufweist, und dass dieses Differenzelement im übrigen als Computerprogramm realisiert ist. Die wesentlichen Funktionen werden dadurch in Softwareform auf einem geeigneten Mikrochip durchgeführt, so dass die Gesamtanordnung extrem kompakt gestaltet werden kann.

In den Rahmen der vorliegenden Erfindung fällt auch ein Verfahren zum Einstellen der Polarisation eines eingehenden optischen Signals mit aufmodulierten Daten auf einen definierten Polarisationszustand, mit einem Polarisationsteiler, der das eingehende optische Signal derart bearbeitet, dass an seinem Ausgang zwei optische Signale mit orthogonalen Polarisationszuständen vorliegen, mit einem nachgeschalteten ersten Phasensteller auf dem Signalpfad mindestens eines der beiden Ausgangssignale aus dem Polarisationsteiler, mit einem ersten optischen Koppler, der das Licht der beiden Ausgangssignale jeweils etwa zu gleichen Teilen auf zwei Ausgänge verteilt, mit einem zweiten Phasensteller auf dem Signalpfad mindestens eines der beiden Ausgangssignale aus dem ersten optischen Koppler, sowie mit einem nachgeschalteten zweiten optischen Koppler, wobei dem ersten und zweiten Phasensteller in einer Rückkopplungsschleife jeweils ein Stellsignal zugeführt wird, das aus einem dem bearbeiteten optischen Signal entnommenen Gütesignal gewonnen wird.

Erfindungsgemäß zeichnet sich das Verfahren dadurch aus, dass die Differenz der beiden parallelen optischen Signale von einem Punkt ihrer Signalpfade nach dem ersten optischen Koppler gebildet und daraus ein bipolares Gütesignal gewonnen wird, aus welchem ein Stellsignal an einen der Phasensteller erzeugt wird, das den Phasensteller in einer Rückkopplungsschleife derart einstellt, dass Betrag des Gütesignals minimiert, insbesondere auf Null geregelt wird.

Erfindungsgemäß werden also mehrere Rückkoppelsignale anstelle von einem einzigen abgeleitet und den damit arbeitenden Rückkoppelschleifen zugeführt. Die abgeleiteten Rückkoppelschleifen sind zudem bipolar. Dadurch weiß die Adaptionslogik, in welche Richtung die Stellgröße verändert werden muss und kann entsprechend schnell reagieren. Dies wird dadurch ermöglicht, dass es die Anordnung eines planar realisierbaren optischen Signalprozessors erlaubt, differentielle Signale nach den einzelnen Prozessierungsstufen abzuzweigen.

Besonders vorteilhaft ist eine Variante des erfindungsgemäßen Verfahrens, die vorsieht, dass das bipolare Gütesignal zeitlich aufintegriert und als Stellsignal an den Phasensteller weiterleitet wird. Damit lässt sich das Steuergerät zur Erzeugung des Steuersignals als einfacher Integrator realisieren.

Bevorzugt ist auch eine Verfahrensvariante, bei der das Gütesignal mit dem eingehenden optischen Signal und/oder mit einem daraus abgeleiteten Taktsignal korreliert wird. Auf diese Weise lässt sich eine PMD-Entzerrung auch bei sehr stark verzerrten eingehenden optischen Signalen erreichen.

Vorteilhaft ist weiterhin eine Verfahrensvariante, bei der die beiden von den Signalpfaden von einem Punkt nach dem ersten optischen Koppler zur Gewinnung des bipolaren Gütesignals abgezweigten Signale vor der Bildung ihrer Differenz mit dem eingehenden optischen Signal und/oder mit einem daraus abgeleiteten Taktsignal korreliert werden.

Weiterhin fällt in den Rahmen der vorliegenden Erfindung auch eine Servereinheit, eine Prozessor-Baugruppe sowie eine Gate-Array-Baugruppe zur Unterstützung des oben beschriebenen erfindungsgemäßen Verfahrens sowie ein Computerprogramm zur Durchführung des Verfahrens. Das Verfahren kann sowohl als Hardwareschaltung, als auch in Form eines Computerprogramms realisiert werden. Heutzutage wird eine Software-Programmierung für leistungsstarke DSP's bevorzugt, da neue Erkenntnisse und Zusatzfunktionen leichter durch eine Veränderung der Software auf bestehender Hardwarebasis implementierbar sind. Verfahren können aber auch als Hardwarebausteine in Einrichtungen zur Signalübertragung, beispielsweise in einem IP (=Internet Protocol)-Netzwerk oder einer Telekommunikationsanlage implementiert werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondem haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig.1: Ein Prinzipbild der Funktionsweise eines PMD-Kompensators, der eine Ausführungsform der erfindungsgemäßen Vorrichtung beinhaltet; und
- Fig.2: ein Schema der Funktionsweise eines PMD-Kompensators mit Vorrichtung zum Einstellen der Polarisation nach dem Stand der Technik.

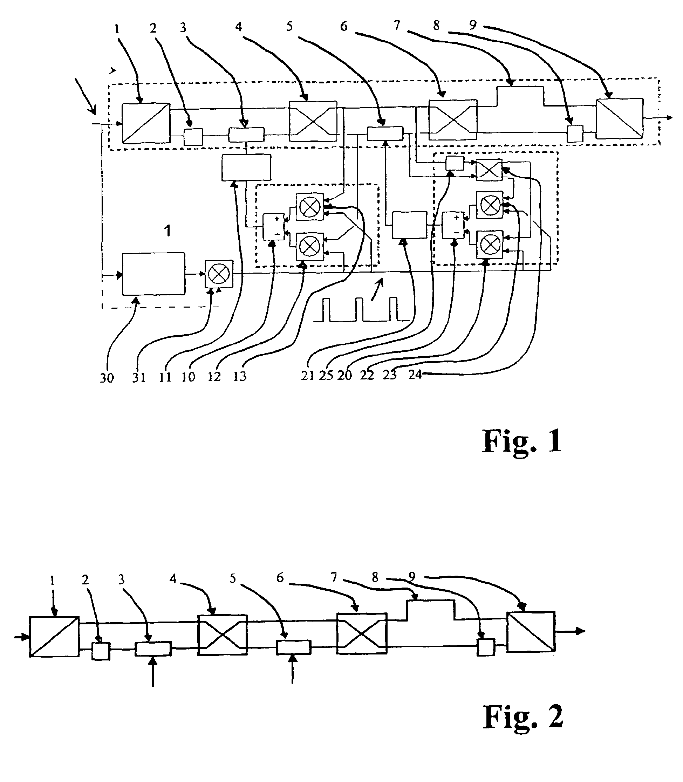

Der in Fig. 2 dargestellte PMD-Kompensator nach dem Stand der Technik umfasst einen Polarisationsteiler 1, in welchen ein in der Regel PMD-verzerrtes optisches Eingangssignal (angedeutet durch einen Pfeil) eingespeist wird. Der Polarisationsteiler 1 bearbeitet das optische Eingangssignal derart, dass an seinem Ausgang zwei optische Signale mit orthogonalen Polarisationszuständen vorliegen. Eines der beiden Ausgangssignale aus dem Polarisationsteiler 1 wird direkt, das andere über einen Polarisationsrotator 2 und einen ersten Phasensteller 3, einem ersten optischen Koppler 4 zugeführt, der das Licht der beiden ihm zugeführten optischen Signale jeweils etwa zu gleichen Teilen auf seine beiden Ausgänge verteilt.

Der eine Ausgangssignalpfad aus dem ersten optischen Koppler 4 wird direkt, der zweite über einen zweiten Phasensteller 5 den beiden Eingängen eines zweiten optischen Kopplers 6 zugeführt. Die Ausgangssignale aus dem zweiten optischen Koppler 6 wiederum werden über ein Laufzeit-Verzögerungselement 7 bzw. einen weiteren Polarisationsrotator 8 den beiden Eingängen eines Polarisations-Kombinierers 9 zugeführt, dessen Ausgangssignal bei entsprechender Prozessführung dann weitgehend PMD-kompensiert ist. Dazu wird dem ersten Phasensteller 3 und dem zweiten Phasensteller 5 in einer Rückkopplungsschleife jeweils ein Stellsignal zugeführt, das aus einem dem bearbeiteten optischen Signal entnommenen Gütesignal gewonnen wird.

In Fig. 1 ist nun ein PMD-Kompensator dargestellt, der eine Ausführungsform der erfindungsgemäßen Vorrichtung umfasst, welche insbesondere die Arbeitsweise der Rückkoppelschleifen aus dem in Fig. 2 dargestellten bekannten optischen Prozessor erheblich verbessert.

Hierfür enthält die Vorrichtung einen ersten Adaptationskorrelator, der aus einem ersten Differenzelement 10 aufgebaut ist, dessen beide Eingänge (+/-) aus zwei Amplitudenmodulatoren 12, 13 gespeist werden, und dessen Ausgangssignal als bipolares Gütesignal einem ersten Steuerelement 11 zugeführt wird, welches daraus ein Stellsignal an den ersten Phasensteller 3 erzeugt, das diesen so einstellt, dass der Betrag des Gütesignals minimiert, insbesondere auf Null geregelt wird. Der eine Amplitudenmodulator 12 erhält hierfür eine aus dem Signalpfad im optischen Prozessor zwischen dem ersten optischen Koppler 4 und dem zweiten Phasensteller 5 ausgekoppeltes Signal, das über eine Takt-Rückgewinnung 30 und einen Amplitudenmodulator 31 getaktet wird. Die Eingänge des anderen Amplitudenmodulators 13 werden einerseits wiederum mit einem Taktsignal, andererseits mit einem aus dem optischen Pfad des anderen Signalausgangs des ersten optischen Kopplers 4 abgegriffenen Signal gespeist.

Des weiteren ist in der in Fig. 1 dargestellten Ausführungsform der erfindungsgemäßen Vorrichtung ein zweiter Adaptionskorrelator vorgesehen, welcher ein zweites Differenzelement 20 umfasst, dessen Ausgangssignal als bipolares Gütesignal einem zweiten Steuerelement 21 zugeführt wird, welches daraus wiederum ein Stellsignal erzeugt, mit dem der zweite Phasensteller 5 so eingestellt wird, dass der Betrag des Gütesignals wiederum minimiert, insbesondere auf Null geregelt wird.

Die beiden Eingänge des zweiten Differenzelements 20 werden von zwei Amplitudenmodulatoren 22, 23 beschickt, die ebenfalls wie die Amplitudenmodulatoren 12, 13 über die Takt-Rückgewinnung 30 und den Amplitudenmodulator 31 getaktet werden. Die beiden anderen Eingänge der Amplitudenmodulatoren 22, 23 werden aus den beiden Signalausgängen eines dritten optischen Kopplers 24 beschickt, der seinerseits an seinen beiden Eingängen ein optisches Signal erhält, welches zwischen dem zweiten Phasensteller 5 und dem zweiten optischen Koppler 6 abgegriffen ist, und ein Signal, welches auf dem anderen der beiden parallelen Signalpfade zwischen dem ersten optischen Koppler 4 und dem zweiten optischen Koppler 6 abgegriffen und durch ein Phasenglied 25 geschickt wird, welches zur festen Phasenverschiebung der Signalphase vorzugsweise um π/2 dient.

Im Falle des Eingangs eines nicht-verzerrten Signals, das nur einen definierten Polarisationszustand aufweist, wirkt die erfindungsgemäße Schaltung als ein Polarisationssteller. Das gesamte optische Signal wird unabhängig vom Polarisationszustand in nur einen Wellenleiter am Ausgang des zweiten optischen Kopplers 6 geschaltet. Die Adaptionsregelung würde auch ohne zugefügten Abtast-Takt arbeiten, so dass die Modulatoren entfallen könnten.

Durch den ersten Adaptionskorrelator wird die optische Leistung in beiden Kopplerausgängen auf einen gleichen Wert mittels des ansteuerbaren ersten Phasenstellers 3 geregelt.

Der zweite Adaptionskorrelator regelt den zweiten Phasensteller 5 dann in der Weise, dass die Phasendifferenz am Eingang des zweiten optischen Kopplers 6 π/2 beträgt. Dann nämlich koppelt das gesamte Licht auf nur einen Arm am Ausgang dieses Kopplers über. Der zweite Adaptionskorrelator überwacht diese Phasenbedingung mit Hilfe seines optischen Kopplers 24, welcher in Quadratur gehalten ist. Eine 90 Grad Phasendifferenz bedeutet für ihn eine gleiche Leistung in seinen beiden Ausgangtoren.

Diese Anordnung kann sehr schnell arbeiten, da die beiden Stellgrößen Δφ1 und Δφ2 am ersten bzw. zweiten Phasensteller 3, 5 unabhängig voneinander geregelt werden, und da am Ausgang der Adaptionskorrelatoren jeweils bipolare Signal vorliegen, die in ihrem Vorzeichen schon die Richtungsinformation bezüglich ihrer Übertragungsrichtung enthalten. Ein zeitaufwendiges Wobbeln ("Dithern") zur Bestimmung eines Extremums entfällt also.

Für PMD-verzerrte Signale ändert sich die Polarisation des Signals während eines Bits. Daher wird die oben beschriebene Polarisationsregelung durch die Abtastung mit dem Takt nur auf einen kurzen Abschnitt des eingehenden optischen Signals beschränkt. An den beiden Ausgängen des zweiten optischen Kopplers 6 erhält man die Signale der langsamen und der schnellen PMD-Achsen dann getrennt. Das Laufzeit-Verzögerungselement 7, das in der Regel aus einem gegenüber dem parallelen optischen Pfad unterschiedlich langen Wellenleiter aufgebaut ist, reduziert den Laufzeitunterschied und die beiden Teilsignale werden mit dem Polarisations-Kombinierer 9 wieder entzerrt auf einer Faser zusammengefügt.

Der optische Prozessor sowie der optische Koppler 24 im zweiten Adaptionskorrelator können kompakt, teilweise oder ganz integriert optisch in planarer Technologie auf einem Substrat realisiert werden oder als Mikro-Strahlenoptik (MOEMS = microoptic electro-mechanical system) aufgebaut werden.

Die Korrelatoren können mittels optisch getriggerten Sampling-Schaltungen realisiert (z.B. als Optohybrid mittels SOA u. passiver Wellenleiterstruktur SiO₂ auf Si-Substrat) oder nach Detektion mittels elektronischen Schaltungen aufgebaut werden.

Für eine Anwendung als "endless polarization control" müsste am Ausgang des ersten optischen Kopplers 4 noch eine Zelle bestehend aus einem Phasenschieber Δφ4 und einem weiteren optischen 1:1-Koppler zusammen mit einem weiteren Adaptionskorrelator eingefügt werden.

Die optischen Koppler 4,6, 24 können als 3dB-waveguide Koppler (zwei singlemode Waveguides oder als multi-mode-interference-coupler (=MMI) ausgeführt sein.

Das Laufzeit-Verzögerungselement 7 zur PMD-Kompensation der ersten Ordnung erzeugt Laufzeitverzögerungen in der Größenordnung von etwa 0.5 mal der bit-Periode (12ps bei 40Gb/s).

Die Takteinheit 30 liefert für die aus dem optischen Prozessor herausgeführten Teilsignale geeignete optische (oder elektrische) Impulse mit der gleichen Bitrate oder auf einer Subharmonischen.

Die Amplitudenmodulatoren 12, 13, 22, 23, 31 können als optische Gatter ausgeführt sein, z.B. optische sampling-Schaltungen mit z.B. SOA-Gliedern, wie sie auch zum optischen Demultiplexen eingesetzt werden, oder als elektronische Gatter/Multiplizierer (dann nach Detektion des aus dem Prozessor geführten Teilsignals mittels Photodiode).

## Patentansprüche

1. Vorrichtung zum Einstellen der Polarisation eines eingehenden optischen Signals mit aufmodulierten Daten auf einen definierten Polarisationszustand, mit einem Polarisationsteiler (1), der das eingehende optische Signal derart bearbeitet, dass an seinem Ausgang zwei optische Signale mit orthogonalen Polarisationszuständen vorliegen, mit einem nachgeschalteten ersten Phasensteller (3) auf dem Signalpfad mindestens eines der beiden Ausgangssignale aus dem Polarisationsteiler (1), mit einem ersten optischen Koppler (4), der das Licht der beiden Ausgangssignale jeweils etwa zu gleichen Teilen auf zwei Ausgänge verteilt, mit einem zweiten Phasensteller (5) auf dem Signalpfad mindestens eines der beiden Ausgangssignale aus dem ersten optischen Koppler (4), sowie mit einem nachgeschalteten zweiten optischen Koppler (6), wobei dem ersten und zweiten Phasensteller (3 bzw.5) in einer Rückkopplungsschleife jeweils ein Stellsignal zugeführt wird, das aus einem dem bearbeiteten optischen Signal entnommenen Gütesignal gewonnen wird,
**dadurch gekennzeichnet,**
**dass** ein erstes Differenzelement (10) vorgesehen ist, welchem die beiden parallelen optischen Signale von einem Punkt ihrer Signalpfade nach dem ersten optischen Koppler (4) zugeführt werden, wobei im ersten Differenzelement (10) aus der Differenz der beiden zugeführten Signale ein bipolares Gütesignal gewonnen wird, und dass dem ersten Differenzelement (10) ein erstes Steuerelement (11) nachgeschaltet ist, welches ein Stellsignal an einen der Phasensteller (3) erzeugt, das den Phasensteller (3) derart einstellt, dass der Betrag des Gütesignals minimiert, insbesondere auf Null geregelt wird.

2. Vorrichtung nach Anspruch 1, **dadurch gekennzeichnet, dass** das Steuerelement (11) als Integrator ausgeführt ist, der das zugeführte Gütesignal zeitlich aufintegriert und als Stellsignal an den Phasensteller (3),weiterleitet.

3. Vorrichtung nach einem der vorhergehenden Ansprüche, **dadurch gekennzeichnet, dass** ein zweites Differenzelement (20) mit nachgeschaltetem zweitem Steuerelement (21) vorgesehen ist, das Stellsignale für den zweiten Phasensteller (5) liefert.

4. Vorrichtung nach Anspruch 3, **dadurch gekennzeichnet, dass** die dem ersten und dem zweiten Differenzelement (10 bzw. 20) zugeführten Signale an denselben Punkten der Signalpfade der parallelen optischen Signale zwischen dem ersten und dem zweiten optischen Koppler (4 bzw. 6) bzw. zwischen dem zweiten Phasensteller (5) und dem zweiten optischen Koppler (6) abgegriffen werden.

5. Vorrichtung nach Anspruch 3, **dadurch gekennzeichnet, dass** der Signalabgriff für die beiden Eingangssignale in das erste Differenzelement (10) von einem Punkt auf dem Signalpfad beiden parallelen optischen Signale nach dem ersten optischen Koppler (4) und vor dem zweiten Phasensteller (5) bzw. einem Punkt zwischen dem ersten und dem zweiten optischen Koppler (4 bzw. 6) und der Signalabgriff für die beiden Eingangssignale in das zweite Differenzelement (20) von einem Punkt nach dem zweiten Phasensteller (5) und vor dem zweiten optischen Koppler (6) bzw. einem Punkt zwischen dem ersten und dem zweiten optischen Koppler (4 bzw. 6) erfolgt, dass ein dritter optischer Koppler (24) den beiden Signaleingängen in das zweite Differenzelement (20) vorgeschaltet ist, und dass auf einem Signalpfad vor den beiden Signaleingängen in den dritten optischen Koppler (24) ein Phasenglied (25) zur festen Phasenverschiebung der Signalphase, vorzugsweise um π/2 vorgesehen ist.

6. Vorrichtung nach einem der vorhergehenden Ansprüche, **dadurch gekennzeichnet, dass** auf einem Ausgangssignalpfad nach dem zweiten optischen Koppler (6) ein Laufzeit-Verzögerungselement (7) vorgesehen ist, dem ein Polarisations-Kombinierer (9) oder ein polarisationserhaltendes Koppelglied nachgeschaltet ist.

7. Vorrichtung nach einem der vorhergehenden Ansprüche, **dadurch gekennzeichnet, dass** mindestens ein Korrelator vorgesehen ist, der das Gütesignal aus einem der Differenzelemente (10, 20) mit dem Eingangssignal der Vorrichtung und/oder mit einem daraus abgeleiteten Taktsignal korreliert.

8. Vorrichtung nach einem der Ansprüche 1 bis 6, **dadurch gekennzeichnet, dass** mindestens ein Korrelator vorgesehen ist, der die Eingangssignale zu einem der Differenzelemente (10, 20) mit dem Eingangssignal der Vorrichtung und/oder mit einem daraus abgeleiteten Taktsignal korreliert.

9. Vorrichtung nach einem der Ansprüche 7 oder 8, **dadurch gekennzeichnet, dass** für jedes Differenzelement (10, 20) ein Korrelator vorgesehen ist.

10. Vorrichtung nach einem der Ansprüche 7 bis 9, **dadurch gekennzeichnet, dass** mindestens ein Korrelator Wandelglieder zur optisch-elektrischen Wandlung ihrer Eingangssignale aufweist, und dass dieser Korrelator im übrigen als elektrische Baugruppe realisiert ist.

11. Vorrichtung nach einem der vorhergehenden Ansprüche, **dadurch gekennzeichnet, dass** mehrere Kaskaden mit weiteren Phasenstellem und weiteren optischen Kopplern vorgesehen sind.

12. Vorrichtung nach einem der vorhergehenden Ansprüche, **dadurch gekennzeichnet, dass** mindestens ein Differenzelement (10,20) Wandelglieder zur optisch-elektrischen Wandlung seiner Eingangssignale aufweist, und dass dieses Differenzelement im übrigen als elektrische Baugruppe realisiert ist.

13. Vorrichtung nach Anspruch 12, **dadurch gekennzeichnet, dass** das Differenzelement (10, 20) Wandelglieder zur Analog/Digital-Wandlung seiner optisch-elektrisch gewandelten Eingangssignale aufweist, und dass dieses Differenzelement im übrigen als Computerprogramm realisiert ist.

14. Verfahren zum Einstellen der Polarisation eines eingehenden optischen Signals mit aufmodulierten Daten auf einen definierten Polarisationszustand, mit einem Polarisationsteiler (1), der das eingehende optische Signal derart bearbeitet, dass an seinem Ausgang zwei optische Signale mit orthogonalen Polarisationszuständen vorliegen, mit einem nachgeschalteten ersten Phasensteller (3) auf dem Signalpfad mindestens eines der beiden Ausgangssignale aus dem Polarisationsteiler (1), mit einem ersten optischen Koppler (4), der das Licht der beiden Ausgangssignale jeweils etwa zu gleichen Teilen auf zwei Ausgänge verteilt, mit einem zweiten Phasensteller (5) auf dem Signalpfad mindestens eines der beiden Ausgangssignale aus dem ersten optischen Koppler (4), sowie mit einem nachgeschalteten zweiten optischen Koppler (6), wobei dem ersten und zweiten Phasensteller (3 bzw. 5) in einer Rückkopplungsschleife jeweils ein Stellsignal zugeführt wird, das aus einem dem bearbeiteten optischen Signal entnommenen Gütesignal gewonnen wird,
**dadurch gekennzeichnet,**
**dass** die Differenz der beiden parallelen optischen Signale von einem Punkt ihrer Signalpfade nach dem ersten optischen Koppler (4) gebildet und daraus ein bipolares Gütesignal gewonnen wird, aus welchem ein Stellsignal an einen der Phasensteller (3,5) erzeugt wird, das den Phasensteller (3,5) in einer Rückkopplungsschleife derart einstellt, dass Betrag des Gütesignals minimiert, insbesondere auf Null geregelt wird.

15. Verfahren nach Anspruch 14, **dadurch gekennzeichnet, dass** das bipolare Gütesignal zeitlich aufintegriert und als Stellsignal an den Phasensteller (3,5) weitergeleitet wird.

16. Verfahren nach Anspruch 14 oder 15, **dadurch gekennzeichnet, dass** das Gütesignal mit dem eingehenden optischen Signal und/oder mit einem daraus abgeleiteten Taktsignal korreliert wird.

17. Verfahren nach einem der Ansprüche 14 bis 16, **dadurch gekennzeichnet, dass** die beiden von den Signalpfaden von einem Punkt nach dem ersten optischen Koppler (4) zur Gewinnung des bipolaren Gütesignals abgezweigten Signale vor der Bildung ihrer Differenz mit dem eingehenden optischen Signal und/oder mit einem daraus abgeleiteten Taktsignal korreliert werden.

## Claims

1. Device for setting the polarization of an incoming optical signal with modulated data to a defined polarization state, with a polarizing beam splitter (1), which processes the incoming optical signal in such a way that two optical signals with orthogonal polarization states are present at its output, with a downstream first phase shifter (3) on the signal path of at least one of the two output signals from the polarizing beam splitter (1), with a first optical coupler (4), which distributes the light of the two output signals in each case in roughly equal parts to two outputs, with a second phase shifter (5) on the signal path of at least one of the two output signals from the first optical coupler (4), and with a downstream second optical coupler (6), the first and second phase shifters (3, 5) each being fed in a feedback loop a corrective signal, which is obtained from a quality signal extracted from the processed optical signal,
**characterized in that**
a first difference element (10) is provided, to which the two parallel optical signals are fed from a point in their signal paths after the first optical coupler (4), a bipolar quality signal being obtained in the first difference element (10) from the difference of the two supplied signals, and that a first control element (11) is switched downstream to the first difference element (10) and generates a corrective signal to one of the phase shifters (3), which adjusts the phase shifter (3) in such a way that the amount of the quality signal is minimized and in particular adjusted to zero.

2. Device according to Claim 1, **characterized in that** the control element (11) is executed as an integrator, which integrates the supplied quality signal timewise and forwards it as a corrective signal to the phase shifter (3).

3. Device according to one of the preceding claims, **characterized in that** a second difference element (20) with a downstream second control element (21) is provided, which supplies corrective signals for the second phase shifter (5).

4. Device according to Claim 3, **characterized in that** the signals fed to the first and the second difference element (10, 20) are tapped at the same points of the signal paths of the parallel optical signals between the first and the second optical coupler (4, 6) or between the second phase shifter (5) and the second optical coupler (6).

5. Device according to Claim 3, **characterized in that** the signal tapping for the two input signals into the first difference element (10) takes place from a point on the signal path of both parallel optical signals after the first optical coupler (4) and before the second phase shifter (5) or from a point between the first and the second optical coupler (4, 6), and the signal tapping for the two input signals into the second difference element (20) takes place from a point after the second phase shifter (5) and before the second optical coupler (6) or from a point between the first and the second optical coupler (4, 6), that a third optical coupler (24) is connected upstream of the two signal inputs into the second difference element (20), and that on a signal path before the two signal inputs into the third optical coupler (24) a phase element (25) is provided for fixed phase displacement of the signal phase, preferably by n/2.

6. Device according to one of the preceding claims, **characterized in that** a runtime delay element (7) is provided on an output signal path after the second optical coupler (6), downstream of which element a polarization combiner (9) or a polarization-maintaining coupling element is connected.

7. Device according to one of the preceding claims, **characterized in that** at least one correlator is provided, which correlates the quality signal from one of the difference elements (10, 20) with the input signal of the device and/or with a clock signal derived from it.

8. Device according to one of the claims 1 to 6, **characterized in that** at least one correlator is provided, which correlates the input signals to one of the difference elements (10, 20) with the input signal of the device and/or with a clock signal derived from it.

9. Device according to one of the claims 7 or 8, **characterized in that** for each difference element (10, 20) a correlator is provided.

10. Device according to one of the claims 7 to 9, **characterized in that** at least one correlator has conversion elements for optical-electrical conversion of its input signals, and that this correlator is otherwise implemented as an electrical module.

11. Device according to one of the preceding claims, **characterized in that** several cascades with further phase shifters and further optical couplers are provided.

12. Device according to one of the preceding claims, **characterized in that** at least one difference element (10, 20) has conversion elements for optical-electrical conversion of its input signals, and that this difference element is otherwise implemented as an electrical module.

13. Device according to Claim 12, **characterized in that** the difference element (10, 20) has conversion elements for analog-digital conversion of its optically-electrically converted input signals, and that this difference element is also implemented as a computer program.

14. Method for setting the polarization of an incoming optical signal with modulated data to a defined polarization state, with a polarizing beam splitter (1), which processes the incoming optical signal in such a way that two optical signals with orthogonal polarization states are present at its output, with a downstream first phase shifter (3) on the signal path of at least one of the two output signals from the polarizing beam splitter (1), with a first optical coupler (4), which distributes the light of the two output signals in each case in roughly equal parts to two outputs, with a second phase shifter (5) on the signal path of at least one of the two output signals from the first optical coupler (4), and with a downstream second optical coupler (6), the first and second phase shifters (3, 5) each being fed in a feedback loop a corrective signal, which is obtained from a quality signal extracted from the processed optical signal,
**characterized in that**
the difference of the two parallel optical signals is formed from a point of their signal paths after the first optical coupler (4) and a bipolar quality signal is obtained from this, from which signal a corrective signal to one of the phase shifters (3, 5) is generated, which adjusts the phase shifter (3, 5) in a feedback loop in such a way that the amount of the quality signal is minimized and in particular adjusted to zero.

15. Method according to Claim 14, **characterized in that** the bipolar quality signal is integrated timewise and forwarded as a corrective signal to the phase shifter (3, 5).

16. Method according to Claim 14 or 15, **characterized in that** the quality signal is correlated with the incoming optical signal and/or with a clock signal derived from this.

17. Method according to one of the claims 14 to 16, **characterized in that** the two signals tapped off from the signal paths from a point after the first optical coupler (4) to obtain the bipolar quality signal are correlated before the formation of their difference with the incoming optical signal and/or with a clock signal derived from this.

## Revendications

1. Dispositif pour le réglage de la polarisation d'un signal optique entrant avec données modulées sur un état de polarisation défini, avec un séparateur de polarisation (1) qui traite le signal optique entrant de telle façon que soient obtenus à la sortie de celui-ci deux signaux optiques avec des états de polarisation orthogonaux, avec un premier convertisseur de phase (3) disposé en aval sur le parcours d'au moins un des deux signaux de sortie issus du séparateur de polarisation (1), avec un premier coupleur optique (4) qui répartit, respectivement à proportion environ égale, la lumière des deux signaux de sortie sur deux sorties, avec un second convertisseur de phase (5) sur le parcours d'au moins un des deux signaux de sortie issus du premier coupleur optique (4), ainsi qu'avec un deuxième coupleur optique (6) placé en aval, sachant que le premier et le second convertisseurs de phase (3 et 5) sont alimentés dans une boucle de rétroaction par respectivement un signal de positionnement obtenu à partir d'un signal de référence extrait du signal optique traité
**caractérisé en ce**
**qu'**est prévu un premier élément différentiel (10) alimenté par les deux signaux optiques parallèles d'un point du parcours du signal situé après le premier coupleur optique (4), sachant qu'un signal de référence bipolaire est obtenu dans le premier élément différentiel (10) à partir de la différence des deux signaux introduits, et que le premier élément différentiel (10) est suivi d'un premier élément de commande (11) qui produit un signal de positionnement vers un des convertisseurs de phase (3) qui règle le convertisseur de phase (3) de telle façon que la grandeur du signal de référence soit minimisée et plus particulièrement réglée sur zéro.

2. Dispositif selon la revendication 1, **caractérisé en ce que** l'élément de commande (11) est conçu en tant qu'intégrateur qui intègre temporairement le signal de référence introduit et le transmet au convertisseur de phase (3) sous forme de signal de positionnement.

3. Dispositif selon une des revendications précédentes, **caractérisé en ce qu'**est prévu un second élément différentiel (20) suivi d'un second élément de commande (21), produisant des signaux de positionnement pour le second convertisseur de phase (5).

4. Dispositif selon la revendication 3, **caractérisé en ce que** les signaux introduits dans le premier et le second éléments différentiels (10 et 20) sont prélevés à des points identiques des parcours des signaux optiques parallèles entre le premier et le deuxième coupleur optique (4 et 6) ou entre le second convertisseur de phase (5) et le deuxième coupleur optique (6).

5. Dispositif selon la revendication 3, **caractérisé en ce que** le prélèvement du signal pour les deux signaux d'entrée dans le premier élément différentiel (10) a lieu à partir d'un point sur le parcours des deux signaux optiques parallèles après le premier coupleur optique (4) et avant le second convertisseur de phase (5) ou à partir d'un point situé entre le premier et le deuxième coupleur optique (4 et 6), que le prélèvement du signal pour les deux signaux d'entrée dans le second élément différentiel (20) a lieu à partir d'un point situé après le second convertisseur de phase (5) et avant le deuxième coupleur optique (6) ou à partir d'un point situé entre le premier et le deuxième coupleur optique (4 et 6), qu'un troisième coupleur optique (24) est placé avant les deux entrées de signaux dans le second élément différentiel (20), et qu'un étage déphaseur (25) est prévu sur un parcours du signal avant les deux entrées dans le troisième coupleur optique (24) pour un déphasage fixe de la phase du signal, de préférence de π/2.

6. Dispositif selon une des revendications précédentes, **caractérisé en ce qu'**est prévu, sur un parcours du signal de sortie après le deuxième coupleur optique (6), un temporisateur de parcours (7) suivi d'un combineur de polarisation (9) ou d'un élément de couplage maintenant la polarisation.

7. Dispositif selon une des revendications précédentes, **caractérisé en ce qu'**est prévu au moins un corrélateur qui corrèle le signal d'entrée issu d'un des éléments différentiels (10, 20) avec le signal d'entrée du dispositif et/ou avec un signal d'horloge dérivant de celui-ci.

8. Dispositif selon une des revendications 1 à 6, **caractérisé en ce qu'**est prévu au moins un corrélateur qui corrèle les signaux d'entrée vers un des éléments différentiels (10, 20) avec le signal d'entrée du dispositif et/ou avec un signal d'horloge dérivant de celui-ci.

9. Dispositif selon la revendication 7 ou 8, **caractérisé en ce qu'**est prévu un corrélateur pour chaque élément différentiel (10, 20).

10. Dispositif selon une des revendications 7 à 9, **caractérisé en ce qu'**au moins un corrélateur présente des éléments convertisseurs pour la conversion optoélectrique de ses signaux d'entrée, et que ce corrélateur est réalisé en tant que composant électrique.

11. Dispositif selon une des revendications précédentes, **caractérisé en ce que** sont prévues plusieurs cascades avec des convertisseurs de phase et des coupleurs optiques supplémentaires.

12. Dispositif selon une des revendications précédentes, **caractérisé en ce qu'**au moins un élément différentiel (10, 20) présente des éléments convertisseurs pour la conversion optoélectrique de ses signaux d'entrée, et que ce même élément différentiel est conçu comme un composant électrique.

13. Dispositif selon la revendication 12, **caractérisé en ce que** l'élément différentiel (10, 20) présente des éléments convertisseurs pour la conversion analogue/numérique de ses signaux d'entrée optoélectriquement convertis, et que cet élément différentiel est en outre conçu comme un logiciel informatique.

14. Procédé pour le réglage de la polarisation d'un signal optique entrant avec données modulées sur un état de polarisation défini, avec un séparateur de polarisation (1) qui traite le signal optique entrant de telle façon que soient obtenus à la sortie de celui-ci deux signaux optiques avec des états de polarisation orthogonaux, avec un premier convertisseur de phase (3) placé en aval sur le parcours d'au moins un des deux signaux de sortie issus du séparateur de polarisation (1), avec un premier coupleur optique (4) qui répartit, respectivement à proportion environ égale, la lumière des deux signaux de sortie sur deux sorties, avec un second convertisseur de phase (5) sur le parcours d'au moins un des deux signaux de sortie issus du premier coupleur optique (4), ainsi qu'avec un deuxième coupleur optique (6) placé en aval, sachant que le premier et le second convertisseurs de phase (3 et 5) sont alimentés dans une boucle de rétroaction par respectivement un signal de positionnement obtenu à partir d'un signal de référence extrait du signal optique traité
**caractérisé en ce,**
**que** la différence entre les deux signaux optiques parallèles est formée à partir d'un point de leur parcours situé après le premier coupleur optique (4), de quoi il résulte un signal de référence bipolaire à partir duquel est produit un signal de positionnement pour un des convertisseurs de phase (3, 5) qui règle le convertisseur de phase (3, 5) dans une boucle de rétroaction de telle manière que la grandeur du signal de référence est minimisée, en particulier réglée sur zéro.

15. Procédé selon la revendication 14, **caractérisé en ce que** le signal de référence bipolaire est intégré temporairement et transmis au convertisseur de phase (3, 5) en tant que signal de positionnement.

16. Procédé selon la revendication 14 ou 15, **caractérisé en ce que** le signal de référence est corrélé au signal optique entrant et/ou à un signal d'horloge en dérivant.

17. Procédé selon une des revendications 14 à 16, **caractérisé en ce que** les deux signaux dérivés des parcours du signal à partir d'un point situé après le premier coupleur optique (4) pour l'obtention du signal de référence bipolaire sont corrélés avant la formation de leur différence avec le signal optique entrant et/ou le signal d'horloge en dérivant.
